# EUROPEAN PATENT SPECIFICATION

(11) **EP 1 528 819 B1**
(45) Date of publication and mention of the grant of the patent: **22.11.2006**
(21) Application number: 03292726.1
(22) Date of filing: 31.10.2003
(51) Int. Cl.: H04Q 7/22

(54) **Location-specific communication of broadcast content**
Ortsspezifische Kommunikation von Rundsendeinhalten
Communication spécifique au lieu de contenus de diffusion

(43) Date of publication of application: 04.05.2005
(73) Proprietor: MOTOROLA, INC., Schamburg, Illinois 60196 (US)
(72) Inventor: Martinez, Georges, 75012 Paris (FR); Guiraudou, Michel, 92260 Fontenay-aux-Roses (FR)
(74) Representative: Cross, Rupert Edward Blount

(56) References cited:
- EP-A- 1 199 902
- DE-A- 19 735 836
- US-A- 6 088 598
- US-A1- 2002 187 795
- BEONGKU AN ET AL: "A cehular architecture for supporting geocast services" VTC2000, vol. 3, 24 September 2000 (2000-09-24), pages 1452-1459, XP010524732

## Description

### Field of the invention

This invention relates to location-specific communication of broadcast content.

### Background of the invention

There is a demand for location-specific communication of content. The content may be services or information requested by the user for a specific location, often his current location, or may be services or information that the service provider considers particularly relevant to certain locations, usually a defined area, for example. Location-based services have increasing interest, because of the added value they can bring to the users (and the service providers) while limiting the usage of available communication resources and reducing the risk of sending the user irrelevant content. Such demand has been identified and will be possible for portable and mobile telephone communications over bidirectional links, especially between so-called 3^{rd} generation UMTS base stations and user terminals, for example.

Location-specific communication of content over a wireless broadcast link to broadcast receivers is also of considerable interest. This is the case for applications such as broadcasting location-specific information or advertising to vehicles in movement, and multicasting over Digital Video Broadcast ('DVB') channels, for example, among other broadcast applications. Meeting such demand for location-specific communication of content in the broadcast context will be of increasing interest as the interest for local programs and services or information rises.

However, radio broadcast (satellite or terrestrial) systems are currently unable to provide location-specific communication of content at a precision more precise than the broadcast cell size, which is large (tens of kilometres in diameter in terrestrial broadcast systems, several hundreds of kilometres in satellite broadcast systems). This is likely to be insufficiently precise for users that are seeking information related to their city or district or neighbourhood (for example, advertising about a product such as a car brand, including the closest vendor), where the area of interest is much smaller than the broadcast cell.

One method that could enable location-specific communication of content to destination areas that are smaller than the broadcast cell is filtering the content according to user at the transmitter. However, it is often a principle of broadcasting that the broadcaster should have no knowledge of by whom and where the content is actually consumed. This principle should be applied, at least to some extent, and of course necessarily if it is imposed by regulations, as in some countries. This can represent a fundamental impediment to filtering content at the transmitter as a function of its destination.

When and if filtering at the transmitter is acceptable, in the case of terminals capable both of two-way communication and broadcast communication, it would be possible, at least in theory, to use the return path to extract information as to the location of the broadcast receiver and use it to control the transmissions. However, this turns out to be unsatisfactory for several reasons. Since the broadcast and return paths are independent, this can raise issues of synchronisation. In any case, such use of a return path would consume return path resources that are generally bandwidth limited and relatively expensive. Also, the return path may be unable to provide a sufficient quality of service, in terms of bit rate, for example. In any case, a return path is not available for all types of receiver.

'A Cellular Architecture for Supporting Geocast Services", UTC 2000, IEEE 2000, pages 1452 to 1459; Beongka An et al describes the construction and maintenance of a geocast group by mobile nodes continuously comparing their coordinates with the geocast zone boundaries. If a mobile node is within the geocast zone boundaries the mobile node will receive geocast messages, if a mobile node is not within the geocast zone boundaries the mobile node will not receive geocast messages. However, this document does not describe how to deliver content to specific locations within the geocast zone boundaries.

EP 1,199,902 describes a system in which a transmitted message includes location information, wherein if a receiving user equipment determines that it is within this area a second part of the message is read.

It is desirable to provide a method of location-specific communication of content over a wireless broadcast link at a scale smaller than the broadcast cell and that is operable whether or not such a return path is available and without needing knowledge at the transmitter of by whom and where the content is actually consumed.

### Summary of the invention

The present invention provides a method of location-specific communication of content and a transmitter and a receiver for use in such a method as described in the accompanying claims.

### Brief description of the drawings

Figure 1 is a block schematic diagram of a transmitter for location-specific broadcast communication of content in accordance with an embodiment of the invention, given by way of example,
Figure 2 is a chart illustrating different methods of identifying locations for which content is to be received in a method of location-specific communication of content in accordance with an embodiment of the invention, given by way of example,
Figure 3 is a simplified geographical plan view of cells of a wireless broadcast communication system and cells of a wireless cellular telephone communication system,
Figure 4 is a more detailed block schematic diagram of the transmitter of Figure 1,
Figure 5 is a schematic diagram of a DVB transport stream transmitted in an embodiment of a method of location-specific communication of content in accordance with the invention, given by way of example,
Figure 6 is a block schematic diagram of a user terminal for location-specific communication of content in accordance with an embodiment of the invention, given by way of example, and
Figure 7 is a block schematic diagram of a receiver and filter for location-specific communication of content in the user terminal of Figure 6.

### Detailed description of the preferred embodiments

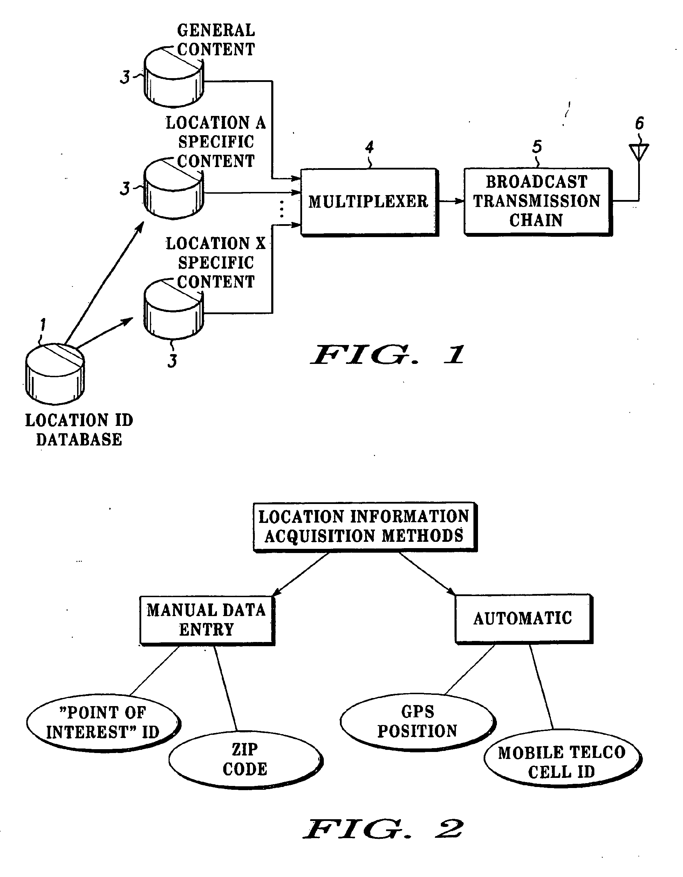

Figure 1 shows a broadcast transmitter in accordance with one embodiment of the present invention for broadcasting location-specific content over a wireless link. The transmitter comprises a database 1 for storing destination codes defining respective destination parts of the broadcast cell served by the transmitter. The transmitter also comprises a first store 2 for general content that is to be communicated to the whole of the broadcast cell and stores 3 for location-specific content that is intended to be communicated to receivers in specific parts of the broadcast cell only. The content from the stores 2 and 3 is supplied to a multiplexer 4 and included in a signal to be broadcast by a broadcast transmission chain 5, the signal being transmitted from an antenna 6 to the whole of the broadcast cell served by the antenna 6.

The broadcast system includes receivers that receive all the broadcast signals transmitted from the antenna 6 as long as they are situated within the broadcast cell. Each of the receivers stores a reception code that identifies a part of the broadcast cell for which it will respond selectively to location-specific content. The part of the broadcast cell identified by the reception code may be defined relative to the current position of the receiver or may be a different part of the broadcast cell that is of interest to the user, for example, the user's home or a place to which the user is intending to travel.

Figure 2 shows by way of example different methods of acquiring the information about the location to be defined by the reception code. In one example, using manual data entry, the user enters a zip code in the vicinity of the desired area, or alternatively selects from a list of names of geographically identified points of interest in its vicinity. In examples of automatic methods of acquiring the location information, in one embodiment of the invention, the receiver includes a module receiving geographical positioning signals identifying the current geographical position of the receiver: an example of such a module is the so-called "global positioning system (GPS)" which provides a positioning signal as a function of the position of the receiver relative to a network of satellites. In another embodiment of the present invention, the broadcast receiver also includes a cellular telephone terminal that produces a signal identifying the mobile telephone cell in which the receiver is currently located.

It will be appreciated that more than one of the methods of location information acquisition shown in Figure 2 may be used for a given receiver. In particular, in one embodiment of the present invention, the receiver is capable of both manual and automatic methods of location information acquisition, and the user selects manually whether to enter the location information manually or whether to use automatic information acquisition.

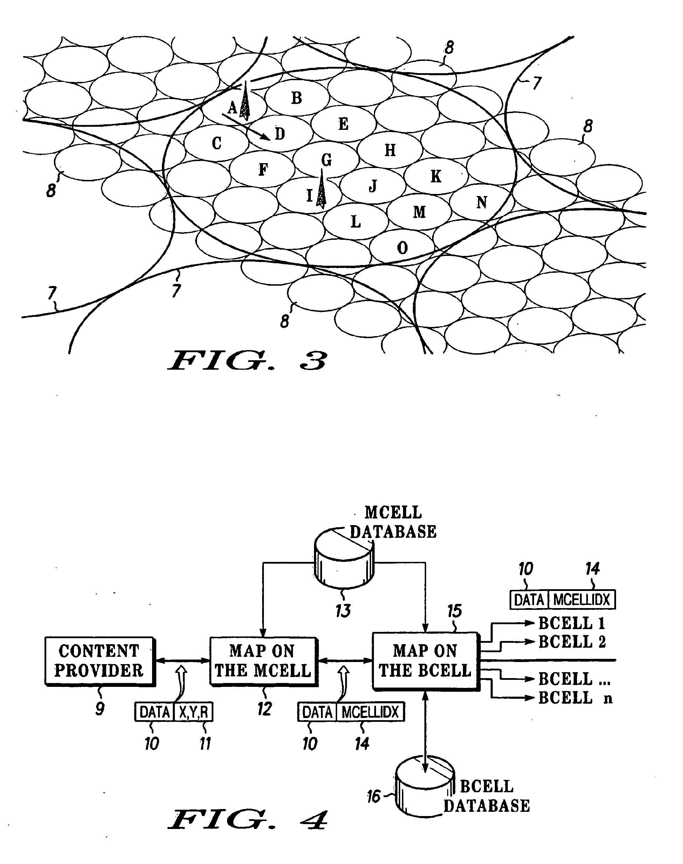

In one embodiment of the present invention, whether or not the user terminal includes a cellular telephone transceiver as well as the broadcast receiver, the destination and reception codes are defined with reference to the identification codes of cellular telephone cells. As shown in Figure 3, the cells 7 of a broadcast system are very much bigger than the cells 8 of a typical cellular telephone system, such as the global system for mobile communications ("GSM") or the general packet radio system ("GPRS"). The size of the telephone cells 8 is sufficiently precise for many purposes when broadcasting content for selective reception at specific locations.

In order to constitute the database 1, the broadcaster maps the geographical extent of those of the telephone cells that are situated within the relevant broadcast cell, identified by the letters A to O in Figure 3, relative to the corresponding telephone cell identification codes; the fact that the latter are transmitted with the downlink telephone signals facilitates their use at a user terminal including a suitable cellular telephone transceiver as well. The cellular telephone identification code or codes for the geographical parts of the broadcast cell that are selected for a given location-specific content are then tagged into the broadcast signals in association with that particular location-specific content.

The receivers store corresponding telephone cell identification codes as reception codes identifying telephone cells corresponding at least approximately to the geographical areas for which they are to respond to the location-specific content. The reception codes are generated either manually or automatically, for example by one of the methods shown in Figure 2.

For example, in one method, the user terminal stores indications of geographic coverage of a set of reception parts of the broadcast cell together with corresponding reception codes and the appropriate reception code(s) are selected manually or automatically by selecting their indications of geographic coverage. In the case where the user terminal includes a GPS location system, the selection is made using data in the received GPS geographical positioning signals identifying the current geographical position of said receiver to select the stored geographical coverage indications that correspond to the current geographical position of the user terminal. If the indications of geographic coverage are to be selected manually, the user terminal can display them in text or graphical form in an interactive display so that the user can enter the selection into the terminal.

When the user terminal includes a cellular telephone receiver, the desired reception code can be produced by extracting or otherwise deriving the reception code from cell identification data contained in the received cellular telephone signals and identifying the cell from which the cellular telephone signals were transmitted.

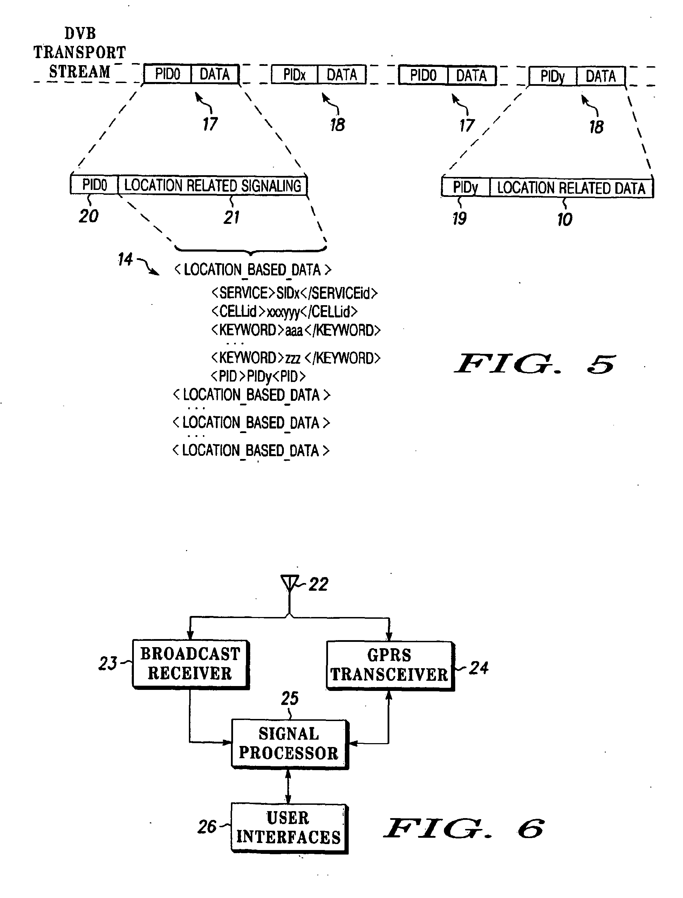

The different actors and an example of a mapping process are illustrated in Figure 4. The content provider 9 provides the content data 10 corresponding to the service or information that he wishes to have broadcasted, associated with an indication 11 of one or more geographical areas within the broadcaster's coverage that define a destination part or parts of the broadcast cells in which the content is to be received, to the exclusion of the other parts. For example, the content data 10 may be associated with a field of the data transport stream indicating the position of one or more circular areas, identified by the geographical or GPS coordinates of their centres or by the name of a locality at the centre, or indicating by name geographical administrative regions where the content is to be delivered.

In the next step of the process, such coordinates, or codes corresponding to the names are transmitted in the data transport stream associated with the corresponding location-specific content data as the destination codes that the broadcast receivers will use to select the content data whose destination corresponds to the area(s) of interest to the receiver. In one convenient method, the geographical destinations defined by the indications 11 are mapped to the coverage of the telephone cells 8 by matching the indications 11 to corresponding indications of geographical coverage of telephone cells 8 in a database 13. The telephone cell database 13 is established from information that the cellular telephone operator provides on its radio planning in terms of cell identifications ("ID") and cell coverage. The result of the mapping is to associate the data 10 with destination codes including the telephone cell IDs. The content is then mapped to the broadcast cells in a step 15 using data from a broadcast cell database 16. The broadcast cell database 16 is established by mapping the coverage of the telephone cells 8 to the coverage of the broadcast cells 7. The result of the broadcast cell mapping 15 is to select the broadcast cell or cells from which the data 10 and destination codes 14 are then broadcast. The different contents with their associated destination codes are stored in the stores 2 and 3 and then appropriately routed to the transmitters of the corresponding broadcast cells for multiplexing in the transport stream.

At the transmitter side, mapping the telephone cell information to the broadcast cell and geographical indications, that is to say establishing and storing a correlation between them, does not need to be a dynamic interaction between the cellular telephone operator and the broadcaster, provided that the definition of the telephone cell network radio planning is stable over a long period of time. The mapping can be stored by the broadcaster and updated periodically. It will be appreciated also, that the location-specific transmission of content and its selective reception by the receivers does not involve a broadcaster being aware of the position of the user.

In one embodiment of the present invention, the broadcast system is a digital video broadcast system ("DVB"). In any DVB cell, the data with the destination code 14 are processed in order to enable simple and efficient location of the content. DVB transport streams are organised with link-layer channels identified with a packet identifier ("PID") and the data can be mapped to any PID.

Preferably, as shown in Figure 5, the destination code 14 is inserted in a PID that is easily identified by the receivers, in order to enable rapid reaction to the location-specific destination code. In particular, the destination code 14 includes a descriptor that associates it with the PID where the data is actually located. Hence, the terminal can readily extract and parse the location information from the destination code in the PID in order to establish whether the content 10 is relevant to the locations identified by reception codes in the receiver.

An example of implementation of this scheme is shown in Figure 5. The DVB transport stream comprises packets 17 that contain the destination codes and packets 18 that contain the content data 10. The packets 18 comprise standard DVB PID 19 associated with the data packets 10. The packets 17 contain a DVB PID 20 together with content specific location-related signalling 21. The content specific location-related signalling 21 may include an identifier SID for the particular service or information offered and a destination code 14. The location-related signalling 21 may include more than one destination code 14, relating to more than one destination part of the broadcast cell 7, if more than one are of the broadcast cell is relevant to the transmitted content. Alternatively, or as well, the location-related signalling 21 may include more than one destination code 14 identifying the same part of the broadcast cell 7 according to different mappings such as those shown in Figure 2, so that a different receivers defining their respective reception codes by different mappings may respond selectively to the same location-specific content in the event of correspondence between their reception code(s) and at least a respective one of the different transmitted destination codes of the same content. In addition, the location-related signalling 21 may include keywords in the descriptor that can further help the user terminal select the services or information that are of interest. The descriptor for a given content 10 will also include the PID identifying the packets containing this content and the location-related signalling 21 will include a plurality of such descriptors for each of the simultaneously broadcast contents.

An example of a user terminal is shown in Figure 6 and comprises an antenna 22, a broadcast receiver 23, a GPRS transceiver 24, a signal processor for processing the signals from the broadcast receiver 23 and the GPRS transceiver 24, and user interfaces 26 for receiving and exploiting the content data signals from the signal processor 25.

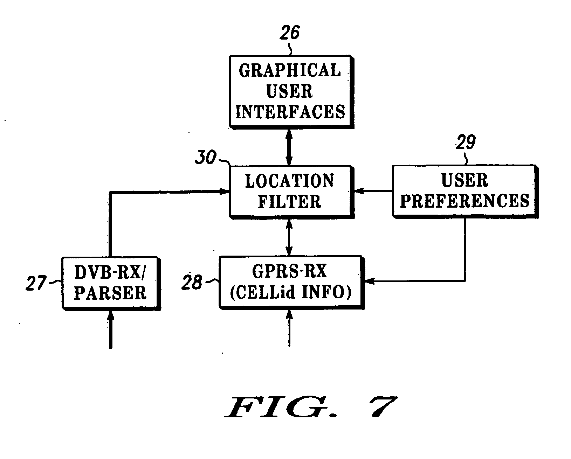

The signal processor 25 is shown in Figure 7 and comprises a parser 27 that receives the signal from the broadcast receiver 23, a module 28 in the GPRS receiver 24 that extracts the GPRS cell ID information that constitutes one possible reception code for the terminal and a register or store 29 that registers the user preferences in terms of which type of mapping to utilise, for example selecting among the mappings shown in Figure 2; in the case of manual entry of destination codes the register 29 also registers the manual entries. A location filter 30 controlled by the register 29 and the module 28 extracts from the DVB signal from the parser 27 the packets that are defined by the reception codes and whose destination codes 14 correspond with the reception codes. The extracted packets are passed on selectively to the user interfaces 26, to the exclusion of content not intended for areas identified by the reception codes, that is to say excluding content data whose destination code(s) do not correspond to the reception code(s). Generic content intended for all areas in the broadcast cell preferably have no destination code, or have a default destination code that all receivers accept as corresponding to their reception code(s).

The broadcast cell may well cover terminals that are not equipped to filter the broadcast signals according to the destination codes and, in one embodiment of the invention, the standard PIDs are arranged so that the default reception condition for receivers not equipped for location-specific reception in accordance with the present invention excludes any location-specific data.

Preferably, the location related information 21 is extracted from the transport stream and formatted in XML format in order to facilitate manipulation and filtering. The user can then be presented in the usual way with a list of the different services and information offered and select from a list the service or information he wishes to utilise.

It will be appreciated that the user terminal does not need to initiate a call on a return link since the filtering is performed at the user terminal using only data available at the user terminal.

## Claims

1. A method of location-specific communication of content comprising transmitting a signal including said content from a transmitter (5) over a wireless broadcast link to a broadcast cell (7) and selectively responding to said content at a receiver (23) situated in said broadcast cell,
**characterised in that** said transmitted signal comprises a destination code (14) associated with said content (10) and identifying a destination part (8) of said broadcast cell for said content, said receiver (23) storing a reception code identifying a reception part of said broadcast cell, and said receiver being selectively responsive to said content (10) in the event of correspondence between said destination code (14) and said reception code , wherein the destination part corresponds to a location within the broadcast cell that is smaller than the broadcast cell and the reception part corresponds to a location within the broadcast cell that is smaller than the broadcast cell.

2. A method of location-specific communication as claimed in claim 1, wherein said destination code (14) and said reception code identify at least one cellular telephone cell (8) situated at least partially within said broadcast cell.

3. A method of location-specific communication as claimed in claim 1 or 2, and comprising generating said reception code by a process including receiving cellular telephone signals including cell identification data identifying the cell (8) from which the cellular telephone signals were transmitted and deriving said reception code from said cell identification data.

4. A method of location-specific communication as claimed in claim 3, and comprising generating said reception code by a process including storing in said receiver indications of geographic coverage of a plurality of said reception parts of said broadcast cell together with corresponding reception codes.

5. A method of location-specific communication as claimed in claim 4 wherein said process of generating said reception code includes receiving geographical positioning signals including data identifying the current geographical position of said receiver, and selecting reception codes of one or more of said reception parts of said broadcast cell that correspond to said current geographical position of said receiver.

6. A method of location-specific communication as claimed in claim 4 wherein said process of generating said reception code includes entering one or more of said indications of geographic coverage so as to select the corresponding reception codes.

7. A method of location-specific communication as claimed in any preceding claim, and comprising generating said destination code (14) by a process including providing an indication (11) of geographic coverage desired for said content (10), storing (16) indications of different geographic parts of said broadcast cell together with corresponding destination codes, and selecting (15) destination codes of one or more of said parts of said broadcast cell corresponding to said geographic coverage desired for said content.

8. A method of location-specific communication as claimed in any preceding claim, and comprising transmitting a plurality of destination codes (14) associated with said content (10) and which identify at least approximately the same destination part of said broadcast cell for said content by different mappings, so that a plurality of receivers (23) having respective reception codes identifying reception parts of said broadcast cell by different mappings may respond selectively to said content (10) in the event of correspondence between said reception code and at least a respective one of said plurality of destination codes.

9. A method of location-specific communication as claimed in any preceding claim, and comprising transmitting over said wireless broadcast link additional content for reception by receivers that do not respond to the first said content (10).

10. A method of location-specific communication as claimed in claim 9, wherein said additional content is transmitted in said transmitted signal associated with an additional destination code (14) identifying a destination part of said broadcast cell for said additional content.

11. A method of location-specific communication as claimed in any preceding claim, wherein said transmitted signal comprises a Digital Video Broadcast signal.

12. A method of location-specific communication as claimed in claim 11, wherein Digital Video Broadcast transport streams are organised with link-layer channels identified with a packet identifier (19, 20), and the destination code (14) includes a descriptor (PIDy) that associates it with the packet identifier where the data is actually located.

13. A method of location-specific communication as claimed in any preceding claim, wherein said receiver (23) is mobile.

14. A transmitter for use in a method of location-specific communication as claimed in any preceding claim, comprising means (9, 12, 13, 15, 16, 4, 5, 6) for registering content (10), producing a destination code (14) and transmitting said content associated with said destination code.

15. A receiver for use in a method of location-specific communication as claimed in any of claims 1 to 13, comprising means (27, 28, 29, 30) for producing a reception code, registering the reception code and selectively responding to content (10) in the event of correspondence between a destination code (14) associated with said content and said reception code.

## Patentansprüche

1. Verfahren der standortspezifischen Kommunikation eines Inhalts, wobei das Verfahren folgende Schritte umfasst:
Übertragen eines Signals einschließlich dem Inhalt von einem Sender (5) über eine drahtlose Funkverbindung an eine Funkzelle (7) und
selektives Ansprechen auf den Inhalt bei einem in der Funkzelle vorhandenen Empfänger (23),
**dadurch gekennzeichnet, dass** das übertragene Signal einen Zielcode (14) aufweist, der in Zusammenhang mit dem Inhalt (10) steht, und einen Zielabschnitt (8) der Funkzelle für den Inhalt identifiziert, wobei der Empfänger (23) einen Empfangscode speichert, der einen Empfangsabschnitt der Funkzelle identifiziert, und der Empfänger selektiv ansprechend auf den Inhalt (10) ist, falls der Zielcode (14) mit dem Empfangscode übereinstimmt, wobei der Zielabschnitt mit einer Speicherstelle innerhalb der Funkzelle übereinstimmt, die kleiner als die Funkzelle ist, und der Empfangsabschnitt mit einer Speicherstelle innerhalb der Funkzelle übereinstimmt, die kleiner als die Funkzelle ist.

2. Verfahren der standortspezifischen Kommunikation nach Anspruch 1, **dadurch gekennzeichnet, dass** der Zielcode (14) und der Empfangscode mindestens eine Mobiltelefonfunkzelle (8) identifizieren, die sich zumindest teilweise innerhalb der Funkzelle befindet.

3. Verfahren der standortspezifischen Kommunikation nach Anspruch 1 oder 2, wobei das Verfahren die Erzeugung des Empfangscodes durch einen Vorgang umfasst, der den Empfang von Mobiltelefonsignalen einschließlich Zellenidentifikationsdaten, die die Zelle (8) identifizieren, von welcher die Mobiltelefonsignale übertragen wurden, sowie die Berechnung des Empfangscodes aus den Zellenidentifikationsdaten einschließt.

4. Verfahren der standortspezifischen Kommunikation nach Anspruch 3, wobei das Verfahren die Erzeugung des Empfangscodes durch einen Vorgang umfasst, der die Speicherung von geografischen Sendegebietsangaben einer Vielzahl der Empfangsabschnitte der Funkzelle zusammen mit den entsprecheneden Empfangscodes in dem Empfänger einschließt.

5. Verfahren der standortspezifischen Kommunikation nach Anspruch 4, **dadurch gekennzeichnet, dass** der Vorgang des Erzeugens des Empfangscodes den Empfang von geografischen Positionssignalen, die Daten einschließen, welche die gegenwärtige geografische Position des Empfängers identifizieren, und die Auswahl von Empfangscodes von einem oder mehreren der Empfangsabschnitte der Funkzelle, die mit der gegenwärtigen geografischen Position des Empfängers übereinstimmt, einschließt.

6. Verfahren der standortspezifischen Kommunikation nach Anspruch 4, **dadurch gekennzeichnet, dass** der Vorgang der Erzeugung des Empfangscodes die Eingabe von einer oder mehrerer geografischer Sendegebietsangaben einschließt, um so die entsprechenden Empfangscodes auszuwählen.

7. Verfahren der standortspezifischen Kommunikation nach einem der vorhergehenden Ansprüchen, wobei das Verfahren die folgenden Schritte umfasst:
Erzeugung des Zielcodes (14) durch einen Vorgang, der die Bereitstellung einer Angabe (11) des für den Inhalt (10) erwünschten geografischen Sendegebiets einschließt,
Speicherung (16) von verschiedenen geografischen Sendegebietsangaben der Funkzelle zusammen mit den entsprechenden Zielcodes, und
Auswahl (15) der Zielcodes von einem oder mehreren Abschnitten der Funkzelle entsprechend des für den Inhalt erwünschten geografischen Sendegebiets.

8. Verfahren der standortspezifischen Kommunikation nach einem der vorhergehenden Ansprüche, wobei das Verfahren die Übertragung einer Vielzahl von Zielcodes (14) umfasst, die in Zusammenhang mit dem Inhalt (10) stehen, und die denselben Zielabschnitt der Funkzelle für den Inhalt durch unterschiedliche Zuordnung (Mapping) zumindest annähernd indentifizieren, so dass eine Vielzahl von Empfängern (23), die entsprechende Empfangscodes aufweisen, welche Empfangsabschnitte der Funkzelle durch unterschiedliche Zuordnungen identifizieren, selektiv auf den Inhalt (10) ansprechen können, falls der Empfangscode und mindestens einer aus der Vielzahl von Zielcodes übereinstimmen.

9. Verfahren der standortspezifischen Kommunikation nach einem der vorhergehenden Ansprüche, wobei das Verfahren die Übertragung eines zusätzlichen Inhalts über die drahtlose Funkverbindung für den Empfang durch Empfänger, die nicht auf den ersten Inhalt (10) ansprechen, einschließt.

10. Verfahren der standortspezifischen Kommunikation nach Anspruch 9, **dadurch gekennzeichnet, dass** der zusätzliche Inhalt in dem übertragenen Signal übertragen wird, das in Zusammenhang mit einem zusätzlichen Zielcode (14) steht, der einen Zielabschnitt der Funkzelle für den zusätzlichen Inhalt identifiziert.

11. Verfahren der standortspezifischen Kommunikation nach einem der vorhergehenden Ansprüche, **dadurch gekennzeichnet, dass** das übertragene Signal ein digitales Videorundfunksignal (DVB-Signal) einschließt.

12. Verfahren der standortspezifischen Kommunikation nach Anspruch 11, **dadurch gekennzeichnet, dass** DVB-Transport Streams durch "Link-Layer"-(Sicherungsschicht)-Kanäle organisiert sind, die mit einem Paketidentifikator (19, 20) identifiziert werden, und dass der Zielcode (14) einen Deskriptor (PIDy) einschließt, der den Code dem Paketidentifikator zuordnet, bei dem sich die Daten tatsächlich befinden.

13. Verfahren der standortspezifischen Kommunikation nach einem der vorhergehenden Ansprüche, **dadurch gekennzeichnet, dass** der Empfänger (23) beweglich ist.

14. Sender zur Verwendung in einem Verfahren der standortspezifischen Kommunikation nach einem der vorhergehenden Ansprüche, wobei der Sender Vorrichtungen (9, 12, 13, 15, 16, 4, 5, 6) zur Registrierung des Inhalts (10), Erzeugung eines Zielcodes (14) und Übertragung des Inhalts, der in Zusammenhang mit dem Zielcode steht, aufweist.

15. Empfänger zur Verwendung in einem Verfahren der standortspezifischen Kommunikation nach Anspruch 1 bis 13, wobei der Empfänger Vorrichtungen (27, 28, 29, 30) zur Erzeugung eines Empfangscodes, zur Registrierung des Empfangscodes und zum selektiven Ansprechen auf den Inhalt (10) in dem Fall, dass ein Zielcode (14), der in Zusammenhang mit dem Inhalt steht, und der Empfangscode übereinstimmen, aufweist.

## Revendications

1. Procédé de communication spécifique au lieu d'un contenu comprenant la transmission d'un signal comprenant ledit contenu entre un émetteur (5), sur une liaison de diffusion sans fil, et une cellule de diffusion (7), et le fait de répondre sélectivement audit contenu au niveau d'un récepteur (23) situé dans ladite cellule de diffusion,
**caractérisé en ce que** ledit signal transmis comprend un code de destination (14) associé audit contenu (10) et identifiant une partie de destination (8) de ladite cellule de diffusion pour ledit contenu, ledit récepteur (23) stockant un code de réception identifiant une partie de réception de ladite cellule de diffusion, et ledit récepteur réagissant sélectivement audit contenu (10) en cas de correspondance entre ledit code de destination (14) et ledit code de réception, dans lequel la partie de destination correspond à un emplacement dans la cellule de diffusion qui est plus petit que la cellule de diffusion et la partie de réception correspond à un emplacement dans la cellule de diffusion qui est plus petit que la cellule de diffusion.

2. Procédé de communication spécifique au lieu selon la revendication 1, dans lequel ledit code de destination (14) et ledit code de réception identifient au moins une cellule de téléphone cellulaire (8) située au moins partiellement dans ladite cellule de diffusion.

3. Procédé de communication spécifique au lieu selon la revendication 1 ou 2, et comprenant la génération dudit code de réception par un processus comprenant la réception de signaux de téléphones cellulaires comprenant des données d'identification de cellules identifiant la cellule (8) à partir de laquelle les signaux de téléphones cellulaires ont été transmis, et le fait de dériver ledit code de réception à partir desdites données d'identification de cellules.

4. Procédé de communication spécifique au lieu selon la revendication 3, et comprenant la génération dudit code de réception par un processus comprenant le stockage, dans ledit récepteur, d'indications de la couverture géographique d'une pluralité desdites parties de réception de ladite cellule de diffusion avec des codes de réception correspondants.

5. Procédé de communication spécifique au lieu selon la revendication 4, dans lequel ledit processus de génération dudit code de réception comprend la réception de signaux de positionnement géographique comprenant des données identifiant la position géographique actuelle dudit récepteur, et la sélection de codes de réception d'une ou plusieurs desdites parties de réception de ladite cellule de diffusion qui correspondent à ladite position géographique actuelle dudit récepteur.

6. Procédé de communication spécifique au lieu selon la revendication 4, dans lequel ledit processus de génération dudit code de réception comprend la saisie d'une ou plusieurs desdits indications de couverture géographique de façon à sélectionner les codes de réception correspondants.

7. Procédé de communication spécifique au lieu selon l'une quelconque des revendications précédentes, et comprenant la génération dudit code de destination (14) par un processus comprenant le fait de fournir une indication (11) de la couverture géographique souhaitée pour ledit contenu (10), le stockage (16) d'indications de différentes parties géographiques de ladite cellule de diffusion avec les codes de destination correspondants, et la sélection (15) de codes de destination d'une ou plusieurs desdites parties de ladite cellule de diffusion correspondant à ladite couverture géographique souhaitée pour ledit contenu.

8. Procédé de communication spécifique au lieu selon l'une quelconque des revendications précédentes, et comprenant la transmission d'une pluralité de codes de destination (14) associés audit contenu (10) et qui identifient au moins approximativement la même partie de destination de ladite cellule de diffusion pour ledit contenu à l'aide de représentations différentes, de telle sorte qu'une pluralité de récepteurs (23) possédant des codes de réception respectifs identifiant des parties de réception de ladite cellule de diffusion à l'aide de différentes représentations puissent répondre sélectivement audit contenu (10) en cas de correspondance entre ledit code de réception et au moins un code respectif de ladite pluralité de codes de destination.

9. Procédé de communication spécifique au lieu selon l'une quelconque des revendications précédentes, et comprenant la transmission, sur ladite liaison de diffusion sans fil, d'un contenu supplémentaire destiné à être reçu par des récepteurs qui ne répondent pas audit premier contenu (10).

10. Procédé de communication spécifique au lieu selon la revendication 9, dans lequel ledit contenu supplémentaire est transmis dans ledit signal transmis associé à un code de destination supplémentaire (14) identifiant une partie de destination de ladite cellule de diffusion pour ledit contenu supplémentaire.

11. Procédé de communication spécifique au lieu selon l'une quelconque des revendications précédentes, dans lequel ledit signal transmis comprend un signal de diffusion vidéo numérique.

12. Procédé de communication spécifique au lieu selon la revendication 11, dans lequel des flux de transport de diffusion vidéo numérique sont organisés avec des canaux de couche de liaison identifiés avec un identifiant de paquet (19, 20), et le code de destination (14) comprend un descripteur (PIDy) qui l'associe à l'identifiant de paquet dans lequel les données sont réellement situées.

13. Procédé de communication spécifique au lieu selon l'une quelconque des revendications précédentes, dans lequel ledit récepteur (23) est mobile.

14. Emetteur destiné à être utilisé dans un procédé de communication spécifique au lieu selon l'une quelconque des revendications précédentes, comprenant des moyens (9, 12, 13, 15, 16, 4, 5, 6) destinés à enregistrer un contenu (10), à produire un code de destination (14) et à transmettre ledit contenu associé audit code de destination.

15. Récepteur destiné à être utilisé dans un procédé de communication spécifique au lieu selon l'une quelconque des revendications 1 à 13, comprenant des moyens (27, 28, 29, 30) destinés à produire un code de réception, à enregistrer le code de réception et à répondre sélectivement au contenu (10) en cas de correspondance entre un code de destination (14) associé audit contenu et ledit code de réception.
